# EUROPEAN PATENT APPLICATION

(11) **EP 1 624 360 A1**
(43) Date of publication of application: **08.02.2006**
(21) Application number: 05105525.9
(22) Date of filing: 22.06.2005
(51) Int. Cl.: G06F 1/00, H04L 29/06

(54) **Secure certificate enrollment of device over a cellular network**

(30) Priority: 30.06.2004 US 881018
(71) Applicant: MICROSOFT CORPORATION, Redmond, Washington 98052-6399 (US)
(72) Inventor: Paul, Jeffrey Michael, 98052, Redmond (US)
(74) Representative: Grünecker, Kinkeldey, Stockmair & Schwanhäusser Anwaltssozietät

(57) **Abstract**

A method and system authenticates and securely enrolls an untrusted device over a cellular network. In operation, a mobile device transmits an identifier (such as the phone number of the mobile device) via a communication transport over a first network (which may be untrusted or partially untrusted) network (such as the cellular network). A server receives the transmission and sends a token to the mobile device across a trusted network (such as the SMS system). The token is transmitted by the mobile device over the first network to the server. The server verifies the token and may, for example, issue a digital certificate for device authentication.

## Description

### Background of the Invention

Portable communication and/or computing devices ("mobile devices ") can often be linked to various networks. For example, cell phones can be used to browse web sites offered through the Internet. Additionally, cell phones can send and receive text messages in addition to offering normal voice communications.

The Short Message Service (SMS) provides the ability to send and receive text messages using mobile devices. The text of an SMS message can comprise characters or numbers or an alphanumeric combination. SMS is incorporated into the Global System for Mobiles (GSM) digital mobile phone standard. A single SMS message can be up to 160 characters of text in length when using the default GSM alphabet coding, only 140 characters when a Cyrillic character set is used, and only 70 characters when a UCS2 international character encoding is used.

Because mobile devices can be used to conduct financial transactions and/or obtain private information, it is often necessary to authenticate the mobile device when it is linked to a network. However, enrolling an untrusted mobile device to obtain a digital certificate over a partially entrusted cellular network to prove the identity of the mobile device is presently a cumbersome process because of the inherent limitations of mobile devices.

### Summary of the Invention

The present invention is directed towards providing a system and method for securely enrolling an untrusted device over a cellular network. In operation, a mobile device transmits an identifier (such as the phone number of the mobile device) via a communication transport over a first network (which may be untrusted or partially untrusted) network (such as the cellular network). A server receives the transmission and sends a token to the mobile device across a trusted network (such as the SMS system). The token is transmitted by the mobile device over the first network to the server. The server verifies the token and may, for example, issue a digital certificate for device authentication.

According to an aspect of the present invention, a computer-implemented method for authenticating a mobile device comprises receiving over a first network an authentication request from the mobile device for an authentication token, wherein the authentication request comprises a first identifier; issuing the authentication token in response to the received request; sending over a second, trusted network the issued token to the mobile device; receiving over the first network a validation request from the mobile device, wherein the validation request comprises the first identifier and the issued token; and verifying that the first identifier of the validation request matches the first identifier of the authentication request, and that the issued token of the validation request matches the authentication token as issued.

According to another aspect of the present invention, a system for authenticating a mobile device comprises a token generator that is configured to receive over a first network an authentication request from the mobile device, wherein the authentication request comprises a first identifier; a network interface that is configured to issue the authentication token in response to the received request and to send over a second, trusted network the issued token to the mobile device; and a verifier that is configured to receive over the first network a validation request from the mobile device, wherein the validation request comprises the first identifier and the issued token, and to verify that the first identifier of the validation request matches the first identifier of the authentication request, and that the issued token of the validation request matches the authentication token as issued.

In accordance with the present invention, an authentication system can be used to automatically (or at least with reduced manual effort) authenticate the previously untrusted device over an arbitrary network using a second trusted network and the arbitrary network. The authentication process may include providing a digital certificate to be used by the mobile device.

### Brief Description of the Drawings

FIGURE 1 illustrates an exemplary computing device that may be used according to exemplary embodiments of the present invention.
FIGURE 2 illustrates an exemplary mobile device that may be used according to exemplary embodiments of the present invention.
FIGURE 3 is a functional block diagram of a system for authenticating mobile devices, in accordance with aspects of the present invention.
FIGURE 4 illustrates an operational flow diagram of a method for authenticating mobile devices, in accordance with aspects of the present invention.

### Detailed Description of the Preferred Embodiment

The present invention now will be described more fully hereinafter with reference to the accompanying drawings, which form a part hereof, and which show, by way of illustration, specific exemplary embodiments for practicing the invention. This invention may, however, be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, an entirely software embodiment or an embodiment combining software and hardware aspects. The following detailed description is, therefore, not to be taken in a limiting sense.

### Illustrative Operating Environment

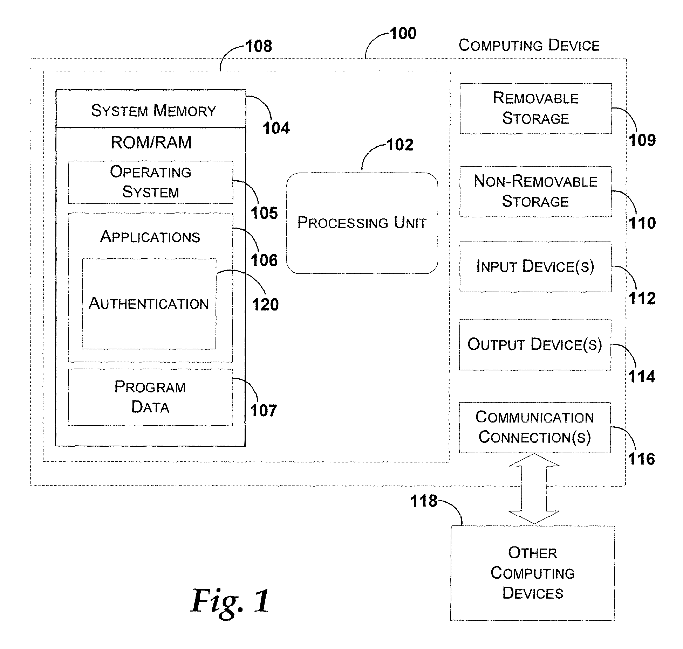

With reference to FIGURE 1, one exemplary system for implementing the invention includes a computing device, such as computing device 100. Computing device may be configured as a client, a server, mobile device, or any other computing device. In a very basic configuration, computing device 100 typically includes at least one processing unit 102 and system memory 104. Depending on the exact configuration and type of computing device, system memory 104 may be volatile (such as RAM), non-volatile (such as ROM, flash memory, etc.) or some combination of the two. System memory 104 typically includes an operating system 105, one or more applications 106, and may include program data 107. In one embodiment, application 106 includes an authentication application 120. This basic configuration is illustrated in FIGURE 1 by those components within dashed line 108.

Computing device 100 may have additional features or functionality. For example, computing device 100 may also include additional data storage devices (removable and/or non-removable) such as, for example, magnetic disks, optical disks, or tape. Such additional storage is illustrated in FIGURE 1 by removable storage 109 and non-removable storage 110. Computer storage media may include volatile and nonvolatile, removable and non-removable media implemented in any method or technology for storage of information, such as computer readable instructions, data structures, program modules, or other data. System memory 104, removable storage 109 and non-removable storage 110 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 100. Any such computer storage media may be part of device 100. Computing device 100 may also have input device(s) 112 such as keyboard, mouse, pen, voice input device, touch input device, etc. Output device(s) 114 such as a display, speakers, printer, etc. may also be included.

Computing device 100 also contains communication connections 116 that allow the device to communicate with other computing devices 118, such as over a network. Communication connection 116 is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

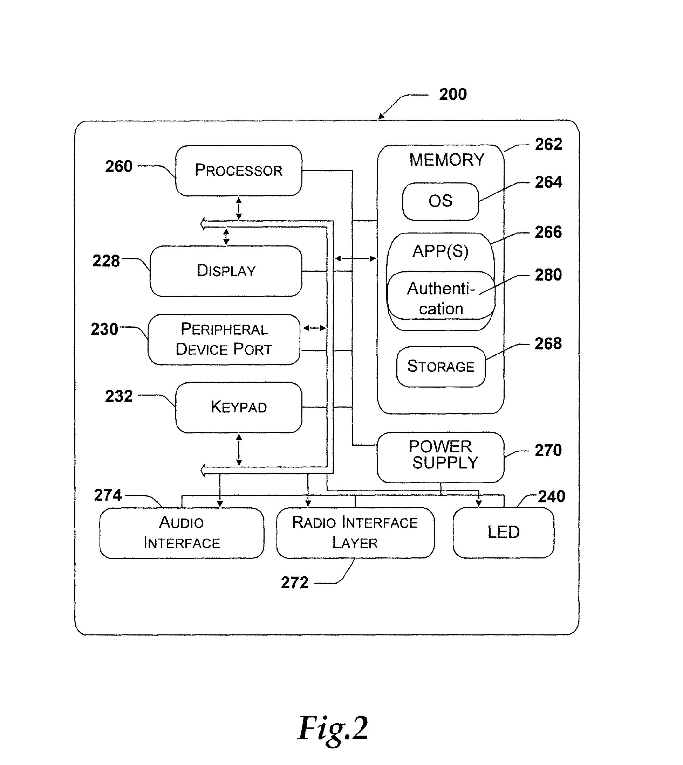

FIGURE 2 shows an alternative operating environment for a mobile device substantially for use in the present invention. In one embodiment of the present invention, mobile device 200 is integrated as a computing device, such as an integrated personal digital assistant (PDA) and wireless phone.

In this embodiment, mobile device 200 has a processor 260, a memory 262, a display 228, and a keypad 232. Memory 262 generally includes both volatile memory (e.g., RAM) and non-volatile memory (e.g., ROM, Flash Memory, or the like). Mobile device 200 includes an operating system 264, which is resident in memory 262 and executes on processor 260. Keypad 232 may be a push button numeric dialing pad (such as on a typical telephone), a multi-key keyboard (such as a conventional keyboard), or may not be included in the mobile device in deference to a touch screen or stylus. Display 228 may be a liquid crystal display, or any other type of display commonly used in mobile computing devices. Display 228 may be touch-sensitive, and would then also act as an input device.

One or more application programs 266 are loaded into memory 262 and run on operating system 264. Examples of application programs include phone dialer programs, e-mail programs, scheduling programs, PIM (personal information management) programs, word processing programs, spreadsheet programs, Internet browser programs, and so forth. In one embodiment, application programs 266 include an authentication application 280. Mobile device 200 also includes non-volatile storage 268 within the memory 262. Non-volatile storage 268 may be used to store persistent information which should not be lost if mobile device 200 is powered down. The applications 266 may use and store information in storage 268, such as e-mail or other messages used by an e-mail application, contact information used by a PIM, appointment information used by a scheduling program, documents used by a word processing application, and the like. A synchronization application also resides on the mobile device and is programmed to interact with a corresponding synchronization application resident on a host computer to keep the information stored in the storage 268 synchronized with corresponding information stored at the host computer.

Mobile device 200 has a power supply 270, which may be implemented as one or more batteries. Power supply 270 might further include an external power source, such as an AC adapter or a powered docking cradle that supplements or recharges the batteries.

Mobile device 200 is also shown with two types of external notification mechanisms: an LED 240 and an audio interface 274. These devices may be directly coupled to power supply 270 so that when activated, they remain on for a duration dictated by the notification mechanism even though processor 260 and other components might shut down to conserve battery power. LED 240 may be programmed to remain on indefinitely until the user takes action to indicate the powered-on status of the device. Audio interface 274 is used to provide audible signals to and receive audible signals from the user. For example, audio interface 274 may be coupled to a speaker for providing audible output and to a microphone for receiving audible input, such as to facilitate a telephone conversation.

Mobile device 200 also includes a radio 272 that performs the function of transmitting and receiving radio frequency communications. Radio 272 facilitates wireless connectivity between the mobile device 200 and the outside world, via a communications carrier or service provider. Transmissions to and from the radio 272 are conducted under control of the operating system 264. In other words, communications received by the radio 272 may be disseminated to application programs 266 via the operating system 264, and vice versa.

The radio 272 allows the mobile device 200 to communicate with other computing devices, such as over a network. The radio 272 is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

### Authentication of Untrusted Mobile Devices

The present invention is generally directed to authenticating a mobile device over an untrusted (or partially untrusted) network, such as a cellular phone network. An untrusted network is a network to which untrusted devices are linked. A partially untrusted network is a network that may have some level of security installed, but still comprises some components that are not completely trusted by at least one of the security mechanisms of the network.

In accordance with the present invention, the user device can be authenticated without having to use a specific mobile operator or network. Additionally, the user of the mobile device is not required (although the user may be asked) to input credentials at an initial and/or subsequent login. In an example scenario of using the present invention, a cell phone user browses web sites on the Internet. The user selects a link for downloading an MDS (MetaData Service) client. The client is downloaded to the cell phone and invoked. When the MDS client is invoked by the user for the first time, a setup wizard of the client collects identification information such as the phone number of the cell phone. The mobile device transmits a request to an anonymous MDS web service using the identification information. The anonymous MDS associates a token with the identification information and uses an SMS message to send the authorization message that includes the token to the mobile device.

The MDS client captures the authorization message and the device client generates a certificate request. The certificate request is sent to a certificate authority web service by placing a call to the certificate authority web service. The certificate request comprises the identification information and the token. The certificate authority validates the association between the token and the identification information. If the validation successful, the certificate authority may issue a digital certificate for the mobile device. The digital certificate may be returned to the phone using the web service.

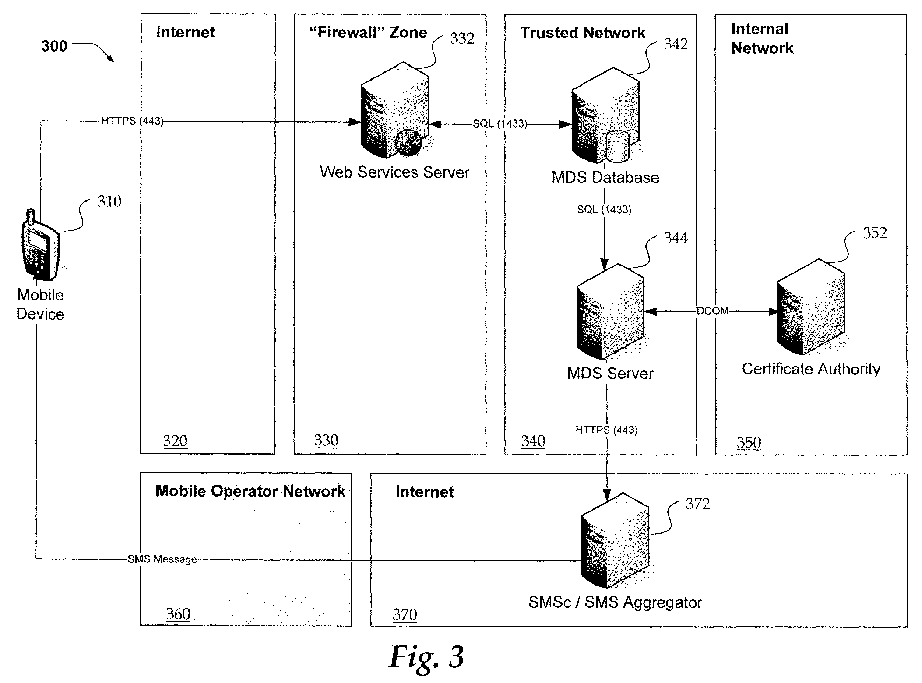

FIGURE 3 is a functional block diagram generally illustrating a mobile device management system 300, in accordance with aspects of the invention. Mobile device 310, web services server 332, MDS database 342, MDS server 344, certificate authority 352, and SMS aggregator 372 are computing devices such as the ones described above in conjunction with FIGURE 1 and FIGURE 2. The MDS database and server are exemplary and may be replaced in various embodiments by, for example, an authentication database and server.

Mobile device 310 is coupled to web services server 332 through the Internet (320). The link through with which mobile device 310 is coupled to the Internet (320) is arbitrary, and may be a wireless or "hardwired" network connection. Additionally the network connection may be an untrusted or partially untrusted connection as described above.

Mobile device 310 is further coupled to mobile operator network 360. The network connection through mobile operator network 360 may be, for example, a SMS connection. The SMS is a trusted network (at least for the purpose of validating a particular phone or subscriber). SMS has a message size that is large enough to pass a token (for example), but is limited to the extent that a single message can carry sufficient information to support an arbitrary authentication scheme by itself. Accordingly, addition information for authentication can be carried over a second network in accordance with the present invention.

Web services server 332 is linked to a trusted network 340 that comprises MDS database 342 and MDS server 344. MDS server 344 is coupled to certificate authority 352 using internal network 350. MDS server 344 is coupled to mobile operator network 360 using SMS aggregator 372, which may reside in the Internet (370)..

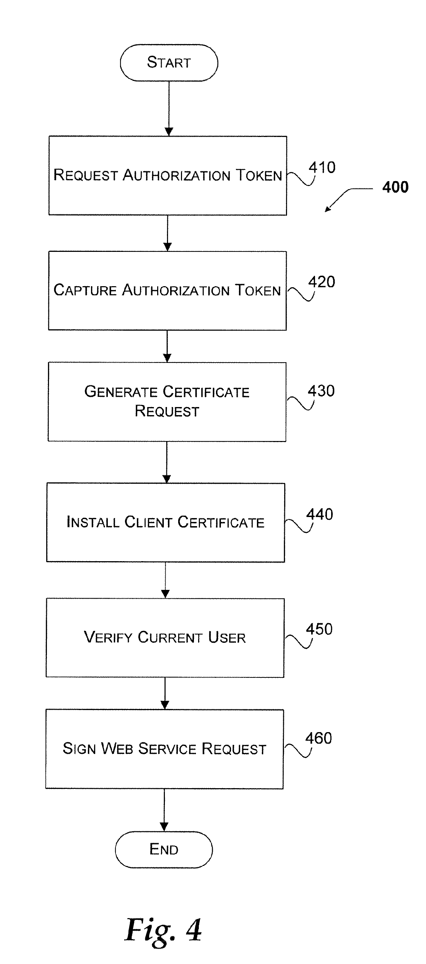

FIGURE 4 illustrates an operational flow diagram of an exemplary process for authenticating mobile devices in accordance with the present invention. Process 400 begins at a start block and continues at block 410.

At block 410, an authorization token is requested. When the device client of a mobile device is started (in response to selecting an MDS link), the mobile device checks the personal certificate store of the user for a valid certificate issued by the (selected) MDS. A valid certificate will typically comprise the phone number of the user (or other identifying information) and the name (or other identifying information) of the mobile operator.

If a valid certificate is not found, the client application may prompt the user for the, for example, phone number of the user (which can be used to validate the particular phone, for example). In various embodiments, other identifying information can be used. For example, information from a subscriber identification module (SIM) can be used and/or entered automatically. Additionally (or in the alternative), the user can be verified (for example) by requesting a password or unique number that is associated with the user.

An authorization token request can then be sent by calling a certificate management web service. The authorization token request will typically comprise the phone number of the device (or other identifying information) and the mobile operator identifier. After successfully calling the service, with the client waits for an SMS message containing the authorization token. Processing continues at block 420.

At block 420, the authorization token is captured. The authorization token can be sent to the device by using, for example, a specially formatted SMS message. The specially formatted SMS message can be "MDSMSM AUTH {GUID}", where the GUID is a global user identifier. The GUID is typically a 32-byte value that is generated by the server and is subsequently used as the authorization token. The message can be captured within the mobile device (before it appears in the user's inbox) by a mail rule client interface. Processing continues at block 430.

At block 430, a certificate request is generated. After the authorization token is captured, the mobile device can generate a certificate request by using a cryptographic API (application programmer interface) call. For example, the caller can call the API to obtained the required buffer size and to set the buffer size to the size that is needed. The subject property of the certificate will typically include the mobile operator identifier, the value of the authorization token (e.g., the GUID), and the phone number or other identifying information of the mobile device. Other properties may include information such as encoding type (e.g., PKCS_7_ASN_BNCODING or X509_ASN_ENCODING.) Processing continues at block 440.

At block 440, the client certificate is installed. The mobile device sends the certificate request, authorization token, and the mobile device phone number (or other identifying information) to the selected web service.

The selected web service processes the request by matching the authorization token with the user's phone number (or other identifying information) and the mobile operator identifier. After successfully matching the information, the web service generates a certificate (which typically includes the phone number or other identifying information of the device and the mobile operator identifier) and then returns the certificate to mobile device.

In response to receiving the certificate, the mobile device installs a certificate in a certificate store, such that the certificate can now be used for signing web request to the selected MDS service. Processing continues at block 450.

At block 450, the current user is verified. Whenever a web service request to a selected MDS services required, the mobile device typically signs the message using the client-side certificate assigned to the phone number (or other identifying information) of the user. Before signing the web service request (by using the certificate), the MDS client application verifies the user by matching the information stored in the MDS client certificate.

If the information does not match, the user can be prompted to, for example, insert the original SIM and to obtain a new certificate by requesting a new authorization token. Processing continues at block 460.

At block 460, the selected MDS web service request is signed. After the correct certificate is found, the MDS web service request can be signed using the client certificate. After the MDS web service request is signed, processing advances to an end block where process 400 ends.

In another embodiment, the token can be associated with a time frame. The token can be checked by the certificate authority (for example) by comparing the issue time of the token with the time that the token is returned to the certificate authority by the mobile device. The checking for "stale" tokens helps to enhance the security of the authentication system in accordance with the present invention because it reduces the time in which tokens might be intercepted and promulgated to "hacker" cell phones.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A computer-implemented method for authenticating a mobile device, comprising:
receiving over a first network an authentication request from the mobile device for an authentication token, wherein the authentication request comprises a first identifier;
issuing the authentication token in response to the received request;
sending over a second, trusted network the issued token to the mobile device;
receiving over the first network a validation request from the mobile device, wherein the validation request comprises the first identifier and the issued token; and
verifying that the first identifier of the validation request matches the first identifier of the authentication request, and that the issued token of the validation request matches the authentication token as issued.

2. The computer-implemented method of Claim 1, further comprising issuing a certificate for the mobile device in response to successful verification of the validation request.

3. The computer-implemented method of Claim 2, further comprising using the issued certificate to validate further requests from the mobile device.

4. The computer-implemented method of Claim 2, wherein the issued certificate comprises an identifier that identifies the second, trusted network

5. The computer-implemented method of Claim 1, wherein the first network is partially untrusted.

6. The computer-implemented method of Claim 1, wherein the first network is untrusted.

7. The computer-implemented method of Claim 1, wherein the first network is a cellular phone network.

8. The computer-implemented method of Claim 1, wherein the first identifier is a phone number for the mobile device.

9. The computer-implemented method of Claim 1, wherein the issued token is a global user identifier.

10. The computer-implemented method of Claim 1, wherein the token is invalidated after a certain time frame.

11. A system for authenticating a mobile device, comprising:
a token generator that is configured to receive over a first network an authentication request from the mobile device, wherein the authentication request comprises a first identifier;
a network interface that is configured to issue the authentication token in response to the received request and to send over a second, trusted network the issued token to the mobile device; and
a verifier that is configured to receive over the first network a validation request from the mobile device, wherein the validation request comprises the first identifier and the issued token, and to verify that the first identifier of the validation request matches the first identifier of the authentication request, and that the issued token of the validation request matches the authentication token as issued.

12. The system of Claim 11, further comprising a certificate authority that is configured to issue a certificate for the mobile device in response to successful verification of the validation request.

13. The system of Claim 12, wherein the verifier is configured to use the issued certificate to validate further requests from the mobile device.

14. The system of Claim 12, wherein the issued certificate comprises an identifier that identifies the second, trusted network

15. The system of Claim 11, wherein the first network is partially untrusted.

16. The system of Claim 11, wherein the first network is untrusted.

17. The system of Claim 11, wherein the first network is a cellular phone network.

18. The system of Claim 11, wherein the first identifier is a phone number for the mobile device.

19. The system of Claim 11, wherein the issued token is a global user identifier.

20. The system of Claim 11, wherein the verifier is configured to invalidate the token after a certain time frame.

21. A computer-readable medium having computer executable instructions for authenticating a mobile device, the instructions comprising:
receiving over a first network an authentication request from the mobile device for an authentication token, wherein the authentication request comprises a first identifier;
issuing the authentication token in response to the received request;
sending over a second, trusted network the issued token to the mobile device;
receiving over the first network a validation request from the mobile device, wherein the validation request comprises the first identifier and the issued token; and
verifying that the first identifier of the validation request matches the first identifier of the authentication request, and that the issued token of the validation request matches the authentication token as issued.

22. The computer-readable medium of Claim 21, further comprising instructions for issuing a certificate for the mobile device in response to successful verification of the validation request.

23. The computer-readable medium of Claim 22, further comprising instructions for using the issued certificate to validate further requests from the mobile device.

24. The computer-readable medium of Claim 22, wherein the issued certificate comprises an identifier that identifies the second, trusted network

25. The computer-readable medium of Claim 21, wherein the first identifier is a phone number for the mobile device.

26. A system for authenticating a mobile device, comprising:
means for receiving over a first network an authentication request from the mobile device for an authentication token, wherein the authentication request comprises a first identifier;
means for issuing the authentication token in response to the received request;
means for sending over a second, trusted network the issued token to the mobile device;
means for receiving over the first network a validation request from the mobile device, wherein the validation request comprises the first identifier and the issued token; and
means for verifying that the first identifier of the validation request matches the first identifier of the authentication request, and that the issued token of the validation request matches the authentication token as issued.

27. The system of Claim 26, further comprising means for issuing a certificate for the mobile device in response to successful verification of the validation request.

28. The system of Claim 27, further comprising means for using the issued certificate to validate further requests from the mobile device.

29. The system of Claim 27, wherein the issued certificate comprises an identifier that identifies the second, trusted network

30. The system of Claim 26, wherein the first identifier is a phone number for the mobile device.
